# EUROPEAN PATENT APPLICATION

(11) **EP 4 738 922 A1**
(43) Date of publication of application: **06.05.2026**
(21) Application number: 23942815.4
(22) Date of filing: 28.06.2023
(51) Int. Cl.: H04W 36/00

(54) **INFORMATION TRANSMISSION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/103456
(87) International publication number: WO 2025/000298

(57) **Abstract**

Embodiments of the present disclosure provide an information transmission method and apparatus, a communication device, a communication system, and a storage medium. A terminal receives first information, wherein the first information is used for determining the service time of a first beam and/or the service time of a second beam, the first beam is a serving beam before the terminal performs beam switching, and the second beam is a beam to which the terminal is to switch. The time accuracy of executing beam switching related operations is improved, and the service continuity is ensured.

## Description

### TECHNICAL FIELD

The disclosure relates to the field of communication technologies, in particular to an information transmission method, an information transmission apparatus, a communication device, a communication system, and a storage medium.

### BACKGROUND

New Internet applications such as augmented reality (AR)/virtual reality (VR), vehicle-to-vehicle communication, etc., are continuously emerging that provides higher requirements for wireless communication technology, and drives continuous evolution of the wireless communication technology to meet application requirements. At present, cellular mobile communication technology is in an evolution stage of the new generation of technology. The new generation of technology has an important feature of supporting a flexible configuration of various service types. Different service types have different requirements for the wireless communication technology, for example, an enhanced mobile broadband (eMBB) service type mainly focus on large bandwidth, high rate, etc.; an ultra-reliable and low latency communication (URLLC) service type mainly focuses on high reliability and low latency; a massive machine type communication (mMTC) service type mainly focuses on a large number of connections. Therefore, the new generation of wireless communication system requires a flexible and configurable design to support transmission of the various service types.

### SUMMARY

As functionality of a terminal increases, energy consumption of the terminal increases, resulting in weak battery life.

Embodiments of the present disclosure provide an information transmission method, an information transmission apparatus, a communication device, a communication system, and a storage medium.

According to a first aspect of embodiments of the present disclosure, the embodiments of the present disclosure provide an information transmission method. The method is performed by a terminal and includes: receiving first information, in which the first information is used to determine a serving time of a first beam and/or a serving time of a second beam, the first beam is a serving beam for the terminal before beam switching, and the second beam is a beam to be switched to for the terminal.

According to a second aspect of embodiments of the present disclosure, the embodiments of the present disclosure provide an information transmission method. The method is performed by an access network device and includes: sending first information, in which the first information is used to determine a serving time of a first beam and/or a serving time of a second beam, the first beam is a serving beam for a terminal before beam switching, and the second beam is a beam to be switched to for the terminal.

In a third aspect of embodiments of the present disclosure, the embodiments of the present disclosure provide an information transmission method. The method is performed by a communication system and includes: sending, by an access network device, first information, in which the first information is used for a terminal to determine a serving time of a first beam and/or a serving time of a second beam, the first beam is a serving beam for the terminal before beam switching, and the second beam is a beam to be switched to for the terminal.

In a fourth aspect of embodiments of the present disclosure, the embodiments of the present disclosure provide a terminal. The terminal includes: a transceiver module, configured to receive first information, in which the first information is used to determine a serving time of a first beam and/or a serving time of a second beam, the first beam is a serving beam for a terminal before beam switching, and the second beam is a beam to be switched to for the terminal.

In a fifth aspect of embodiments of the present disclosure, the embodiments of the present disclosure provide an access network device. The access network device includes: a transceiver module, configured to send first information, in which the first information is used to determine a serving time of a first beam and/or a serving time of a second beam, the first beam is a serving beam for a terminal before beam switching, and the second beam is a beam to be switched to for the terminal.

In a sixth aspect of embodiments of the present disclosure, the embodiments of the present disclosure provide a communication system. The communication system includes a terminal and an access network device. The terminal is configured to implement the information transmission method as described in the first aspect. The access network device is configured to implement the information transmission method as described in the second aspect.

In a seventh aspect of embodiments of the present disclosure, the embodiments of the present disclosure provide a communication device. The communication device includes one or more processors. The one or more processors are configured to call instructions to enable the communication device to perform the information transmission method as described in the first aspect or the second aspect.

In an eighth aspect of embodiments of the present disclosure, the embodiments of the present disclosure provide a storage medium. The storage medium stores instructions which, when running on a communication device, cause the communication device to perform the information transmission method as described in the first aspect or the second aspect.

The terminal may perform beam switching timely, a time accuracy of performing beam switching related operations may be improved, and service continuity may be ensured.

It should be understood that the above general description and the following detailed description are illustrative and explanatory only, and do not constitute a limitation on the present disclosure.

### BRIEF DESCRIPTION OF THE DRAWINGS

The accompanying drawings herein are incorporated into the specification and constitute a part of the specification, illustrate embodiments in conformity with embodiments of the present disclosure, and explain the principle of the present disclosure together with the specification.
FIG. 1a is a schematic diagram illustrating an architecture of a communication system according to an illustrative embodiment.
FIG. 1b is a schematic diagram illustrating an uplink and downlink timing sequence according to an illustrative embodiment.
FIG. 1c is a schematic diagram illustrating an uplink and downlink timing sequence according to an illustrative embodiment.
FIG. 1d is a schematic diagram illustrating beam switching according to an illustrative embodiment.
FIG. 1e is a schematic diagram illustrating beam switching according to an illustrative embodiment.
FIG. 2a is a flowchart illustrating an information transmission method according to an illustrative embodiment.
FIG. 2b is a schematic diagram illustrating beam switching according to an illustrative embodiment.
FIG. 3 is a flowchart illustrating an information transmission method according to an illustrative embodiment.
FIG. 4 is a flowchart illustrating an information transmission method according to an illustrative embodiment.
FIG. 5 is a flowchart illustrating an information transmission method according to an illustrative embodiment.
FIG. 6a is a schematic diagram illustrating an architecture of a terminal according to an illustrative embodiment.
FIG. 6b is a schematic diagram illustrating an architecture of an access network device according to an illustrative embodiment.
FIG. 7a is a schematic diagram illustrating an architecture of a UE according to an illustrative embodiment.
FIG. 7b is a schematic diagram illustrating an architecture of a communication device according to an illustrative embodiment.

### DETAILED DESCRIPTION

Embodiments of the present disclosure provide an information transmission method, an information transmission apparatus, a communication device, a communication system, and a storage medium.

In a first aspect, embodiments of the present disclosure provide an information transmission method. The method is performed by a terminal and includes: receiving first information, in which the first information is used to determine a serving time of a first beam and/or a serving time of a second beam, the first beam is a serving beam for the terminal before beam switching, and the second beam is a beam to be switched to for the terminal.

In the above embodiments, the terminal may determine the serving time of the first beam and/or the serving time of the second beam, to enable the terminal to perform beam switching, which may enable the terminal to perform the beam switching timely, and ensure service continuity.

In combination with some embodiments of the first aspect, in some embodiments, the serving time of the first beam includes:
a service ending time point of the first beam;
the serving time of the second beam includes at least one of:
a service starting time point of the second beam; or
a time window in which the terminal performs beam measurement on the second beam.

In the above embodiments, the terminal may determine the service ending time point of the first beam and/or the service starting time point of the second beam, which may enable the terminal to perform beam switching timely, improve a time accuracy of performing beam switching related operations, and ensure service continuity.

In combination with some embodiments of the first aspect, in some embodiments, the method further includes: determining a service interval between the service ending time point and the service starting time point.

In the above embodiments, the terminal may determine the service interval during which the terminal cannot be serviced.

In combination with some embodiments of the first aspect, in some embodiments, the method further includes: in a case the service interval is greater than or equal to a threshold, switching the terminal to a radio resource control (RRC) non-connected state after the service ending time point, in which the RRC non-connected state includes at least one of: an RRC inactive state or an RRC idle state.

In the above embodiments, the terminal may determine whether to enter the RRC non-connected state based on the service interval, which may save power of the terminal.

In combination with some embodiments of the first aspect, in some embodiments, the method further includes at least one of:
performing a synchronization operation associated with the second beam based on the first information; or
acquiring ephemeris information corresponding to the second beam based on the first information.

In the above embodiments, the terminal may determine the serving time of the first beam and/or the serving time of the second beam, to enable the terminal to perform a beam synchronization operation, which may improve a time accuracy of performing the beam synchronization operation, and ensure the service continuity.

In combination with some embodiments of the first aspect, in some embodiments, performing the synchronization operation associated with the second beam includes at least one of:
performing beam measurement associated with downlink synchronization on the second beam; or
performing beam measurement on the second beam to determine a timing adjustment parameter associated with the second beam.

In the above embodiments, the terminal may perform the beam measurement and/or determine the timing adjustment parameter based on the first information, which may improve a time accuracy of performing beam related operations, and ensure service continuity.

In combination with some embodiments of the first aspect, in some embodiments, performing the synchronization operation associated with the second beam includes:
adjusting uplink timing and/or downlink timing for the second beam according to a synchronization transmission configuration parameter indicated by an access network device.

In the above embodiments, the terminal may adjust the timing through the synchronization transmission configuration parameter based on the first information, which may improve a time accuracy of adjusting the timing, and ensure service continuity.

In combination with some embodiments of the first aspect, in some embodiments, the synchronization transmission configuration parameter includes at least one of:
an indication for adjusting the downlink timing;
ephemeris information corresponding to the second beam;
a timing adjustment parameter associated with the uplink timing; or
information of an effective time of the synchronization transmission configuration parameter.

In combination with some embodiments of the first aspect, in some embodiments, the first information is further used to indicate the synchronization transmission configuration parameter.

In the above embodiments, the synchronization transmission configuration parameter is indicated by the first information, which may reduce a load caused by the terminal determining the synchronization transmission configuration parameter through the beam measurement.

In combination with some embodiments of the first aspect, in some embodiments, the method further includes: determining a beam failure configuration parameter based on the first information, in which the beam failure configuration parameter is used for determining whether the first beam or the second beam is available.

In the above embodiments, the beam failure configuration parameter is indicated using the first information to determine beam availability, which may improve an accuracy of determining the beam availability.

In combination with some embodiments of the first aspect, in some embodiments, the method further includes: performing, by the terminal, random access within a signal coverage range of the second beam, in which a random access configuration of the random access is indicated by an access network device.

In the above embodiments, the random access configuration is indicated using the first information, which may improve an indication efficiency of the first information.

In combination with some embodiments of the first aspect, in some embodiments, the first beam and the second beam are associated with the same serving cell of the terminal.

In the above embodiments, the first beam and the second beam are associated with the same serving cell of the terminal, which may improve applicability of the first information.

In a second aspect, embodiments of the present disclosure provide an information transmission method. The method is performed by an access network device and includes: sending first information, in which the first information is used to determine a serving time of a first beam and/or a serving time of a second beam, the first beam is a serving beam for a terminal before beam switching, and the second beam is a beam to be switched to for the terminal.

In the above embodiments, the access network device sends the first information to the terminal, to enable the terminal to determine the serving time of the first beam and/or the serving time of the second beam, and to perform beam switching, which may enable the terminal to perform the beam switching timely, and ensure service continuity.

In combination with some embodiments of the second aspect, in some embodiments, the serving time of the first beam includes:
a service ending time point of the first beam;
the serving time of the second beam includes at least one of:
   a service starting time point of the second beam; or
   a time window in which the terminal performs beam measurement on the second beam.

In the above embodiments, the first information is provided for the terminal to determine the service ending time point of the first beam and/or the service starting time point of the second beam, which may enable the terminal to perform beam switching timely, improve a time accuracy of performing beam switching related operations, and ensure service continuity.

In combination with some embodiments of the second aspect, in some embodiments, the service ending time point of the first beam and the service starting time point of the second beam are used for the terminal to determine a service interval from the first beam ending service to the second beam starting service.

In the above embodiments, the first information is provided for the terminal to determine the service interval during which the terminal cannot be serviced.

In combination with some embodiments of the second aspect, in some embodiments, the service interval is used for the terminal to determine whether to switch to an RRC non-connected state after the service ending time point, in which the RRC non-connected state includes at least one of: an RRC inactive state, or an RRC idle state.

In the above embodiments, the first information is provided for the terminal to determine whether to enter the RRC non-connected state based on the service interval, which may save power of the terminal.

In combination with some embodiments of the second aspect, in some embodiments, the first information is used for the terminal to perform a synchronization operation associated with the second beam; or the first information is used for determining ephemeris information corresponding to the second beam.

In the above embodiments, the first information is provided for the terminal to determine the serving time of the first beam and/or the serving time of the second beam, to enable the terminal to perform a beam synchronization operation, which may improve a time accuracy of performing the beam synchronization operation, and ensure the service continuity.

In combination with some embodiments of the second aspect, in some embodiments, the synchronization operation associated with the second beam includes at least one of:
performing beam measurement associated with downlink synchronization on the second beam; or
performing beam measurement on the second beam to determine a timing adjustment parameter associated with the second beam.

In the above embodiments, the first information is provided for the terminal to perform the beam measurement and/or determine the timing adjustment parameter, which may improve a time accuracy of performing beam related operations, and ensure service continuity.

In combination with some embodiments of the second aspect, in some embodiments, the synchronization operation associated with the second beam includes:
adjusting uplink timing and/or downlink timing for the second beam according to a synchronization transmission configuration parameter indicated by the access network device.

In the above embodiments, the terminal may adjust the timing through the synchronization transmission configuration parameter based on the first information, which may improve a time accuracy of adjusting the timing, and ensure service continuity.

In combination with some embodiments of the second aspect, in some embodiments, the synchronization transmission configuration parameter includes at least one of:
an indication for adjusting the downlink timing;
ephemeris information corresponding to the second beam;
a timing adjustment parameter associated with the second beam; or
information of an effective time of the synchronization transmission configuration parameter.

In combination with some embodiments of the second aspect, in some embodiments, the first information is further used to indicate the synchronization transmission configuration parameter.

In the above embodiments, the synchronization transmission configuration parameter is indicated by the first information, which may reduce a load caused by the terminal determining the synchronization transmission configuration parameter through the beam measurement.

In combination with some embodiments of the second aspect, in some embodiments, the first information is used for the terminal to determine a beam failure configuration parameter, in which the beam failure configuration parameter is used for determining whether the first beam or the second beam is available.

In the above embodiments, the beam failure configuration parameter is indicated using the first information to determine beam availability, which may improve an accuracy of determining the beam availability.

In combination with some embodiments of the second aspect, in some embodiments, the first information indication is used to indicate a random access configuration of random access performed by the terminal within a signal coverage range of the second beam.

In the above embodiments, the random access configuration is indicated using the first information, which may improve an indication efficiency of the first information.

In combination with some embodiments of the second aspect, in some embodiments, the first beam and the second beam are associated with the same serving cell of the terminal.

In the above embodiments, the first beam and the second beam are associated with the same serving cell of the terminal, which may improve applicability of the first information.

In a third aspect, embodiments of the present disclosure provide an information processing method. The method is performed by a communication system and includes: sending, by an access network device, first information, in which the first information is used for a terminal to determine a serving time of a first beam and/or a serving time of a second beam, the first beam is a serving beam for the terminal before beam switching, and the second beam is a beam to be switched to for the terminal.

In a fourth aspect, embodiments of the present disclosure provide a terminal. The terminal includes: a transceiver module, configured to receive first information, in which the first information is used to determine a serving time of a first beam and/or a serving time of a second beam, the first beam is a serving beam for a terminal before beam switching, and the second beam is a beam to be switched to for the terminal.

In combination with some embodiments of the fourth aspect, in some embodiments, the serving time of the first beam includes:
a service ending time point of the first beam;
the serving time of the second beam includes at least one of:
a service starting time point of the second beam; or
a time window in which the terminal performs beam measurement on the second beam.

In combination with some embodiments of the fourth aspect, in some embodiments, the apparatus further includes: a processing module, configured to determine a service interval between the service ending time point and the service starting time point.

In combination with some embodiments of the fourth aspect, in some embodiments, the processing module is configured to, in a case the service interval is greater than or equal to a threshold, switch the terminal to an RRC non-connected state after the service ending time point, in which the RRC non-connected state includes at least one of: an RRC inactive state or an RRC idle state.

In combination with some embodiments of the fourth aspect, in some embodiments, the apparatus further includes: a processing module, configured to perform at least one of:
performing a synchronization operation associated with the second beam based on the first information; or
acquiring ephemeris information corresponding to the second beam based on the first information.

In combination with some embodiments of the fourth aspect, in some embodiments, the processing module is specifically configured to perform at least one of:
performing beam measurement associated with downlink synchronization on the second beam; or
performing beam measurement on the second beam to determine a timing adjustment parameter associated with the second beam.

In combination with some embodiments of the fourth aspect, in some embodiments, the processing module is specifically configured to adjust uplink timing and/or downlink timing for the second beam according to a synchronization transmission configuration parameter indicated by an access network device.

In combination with some embodiments of the fourth aspect, in some embodiments, the synchronization transmission configuration parameter includes at least one of:
an indication for adjusting the downlink timing;
ephemeris information corresponding to the second beam;
a timing adjustment parameter associated with the uplink timing; or
information of an effective time of the synchronization transmission configuration parameter.

In combination with some embodiments of the fourth aspect, in some embodiments, the first information is further used to indicate the synchronization transmission configuration parameter.

In combination with some embodiments of the fourth aspect, in some embodiments, the apparatus further includes: a processing module, configured to determine a beam failure configuration parameter based on the first information, in which the beam failure configuration parameter is used for determining whether the first beam or the second beam is available.

In combination with some embodiments of the fourth aspect, in some embodiments, the apparatus further includes: a processing module, configured to perform, by the terminal, random access within a signal coverage range of the second beam, in which a random access configuration of the random access is indicated by an access network device.

In combination with some embodiments of the fourth aspect, in some embodiments, the first beam and the second beam are associated with the same serving cell of the terminal.

In a fifth aspect, embodiments of the present disclosure provide an access network device. The access network device includes: a transceiver module, configured to send first information, in which the first information is used to determine a serving time of a first beam and/or a serving time of a second beam, the first beam is a serving beam for a terminal before beam switching, and the second beam is a beam to be switched to for the terminal.

In combination with some embodiments of the fifth aspect, in some embodiments, the serving time of the first beam includes:
a service ending time point of the first beam;
the serving time of the second beam includes at least one of:
   a service starting time point of the second beam; or
   a time window in which the terminal performs beam measurement on the second beam.

In combination with some embodiments of the fifth aspect, in some embodiments, the service ending time point of the first beam and the service starting time point of the second beam are used for the terminal to determine a service interval from the first beam ending service to the second beam starting service.

In combination with some embodiments of the fifth aspect, in some embodiments, the service interval is used for the terminal to determine whether to switch to an RRC non-connected state after the service ending time point, in which the RRC non-connected state includes at least one of: an RRC inactive state, or an RRC idle state.

In combination with some embodiments of the fifth aspect, in some embodiments, the first information is used for the terminal to perform a synchronization operation associated with the second beam; or the first information is used for determining ephemeris information corresponding to the second beam.

In combination with some embodiments of the fifth aspect, in some embodiments, the synchronization operation associated with the second beam includes at least one of:
performing beam measurement associated with downlink synchronization on the second beam; or
performing beam measurement on the second beam to determine a timing adjustment parameter associated with the second beam.

In combination with some embodiments of the fifth aspect, in some embodiments, the synchronization operation associated with the second beam includes:
adjusting uplink timing and/or downlink timing for the second beam according to a synchronization transmission configuration parameter indicated by the access network device.

In combination with some embodiments of the fifth aspect, in some embodiments, the synchronization transmission configuration parameter includes at least one of:
an indication for adjusting the downlink timing;
ephemeris information corresponding to the second beam;
a timing adjustment parameter associated with the second beam; or
information of an effective time of the synchronization transmission configuration parameter.

In combination with some embodiments of the fifth aspect, in some embodiments, the first information is further used to indicate the synchronization transmission configuration parameter.

In combination with some embodiments of the fifth aspect, in some embodiments, the first information is used for the terminal to determine a beam failure configuration parameter, in which the beam failure configuration parameter is used for determining whether the first beam or the second beam is available.

In combination with some embodiments of the fifth aspect, in some embodiments, the first information indication is used to indicate a random access configuration of random access performed by the terminal within a signal coverage range of the second beam.

In combination with some embodiments of the fifth aspect, in some embodiments, the first beam and the second beam are associated with the same serving cell of the terminal.

In a sixth aspect, embodiments of the present disclosure provide a communication system. The information transmission system includes a terminal and an access network device. The terminal is configured to implement the information transmission method as described in the first aspect. The access network device is configured to implement the information transmission method as described in the second aspect.

In a seventh aspect, embodiments of the present disclosure provide a communication device. The communication device includes one or more processors. The one or more processors are configured to call instructions to enable the communication device to perform the information transmission method as described in the first aspect or the second aspect.

In an eighth aspect, embodiments of the present disclosure provide a storage medium. The storage medium stores instructions which, when running on a communication device, cause the communication device to perform the information transmission method as described in the first aspect or the second aspect.

It is noted that the access network device, the terminal, the communication device, the communication system, the storage medium, the program product and the computer program are all configured to perform the method according to the embodiments of the present disclosure. Therefore, for beneficial effects that may be achieved by the above subject matter, reference may be made to the beneficial effects of the corresponding method, and details are not repeated herein.

The present disclosure proposes an information transmission method, an information transmission apparatus, a communication device, a communication system, and a storage medium. In some embodiments, terms such as information transmission method, information processing method, and information communication method, etc. may be replaced with each other, terms such as information transmission apparatus, information processing apparatus, and information communication apparatus, etc. may be replaced with each other, and terms such as communication system and information processing system, etc. may be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and an order of the steps in a certain embodiment may be arbitrarily exchanged. In addition, optional implementations in a certain embodiment may be arbitrarily combined. In addition, respective embodiments may be arbitrarily combined with other, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present disclosure, "a plurality of" refers to two or more.

In some embodiments, the terms "at least one of", "one or more", "a plurality of", "multiple", etc. may be used interchangeably.

In embodiments of the present disclosure, descriptions such as "at least one of A or B", "A and/or B", "in a case, A; in another case, B", "in response to a case, A; in response to another case, B", etc. may include the following technical solutions according to situations: executing A (independently of B) in some embodiments; executing B (independently of A) in some embodiments; executing one selected from A and B in some embodiments (selectively executing A or B) in some embodiments; and executing A and B (both A and B) in some embodiments. When there are more branches such as A, B, C, etc., the above is applicable.

In embodiments of the present disclosure, descriptions such as "A or B" etc. may include the following technical solutions according to situations: executing A (independently of B) in some embodiments; executing B (independently of A) in some embodiments; executing one selected from A and B in some embodiments (selectively executing A or B) in some embodiments. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "in response to ...", "in response to determining ...", "in a case of...", "upon", "when", "while", "if", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "smaller than", "smaller than or equal to", "no more than", "lower than", "lower than or equal to", "not higher than", and "below" may be replaced with each other.

In some embodiments, the apparatus, etc. may be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like may be used interchangeably.

In some embodiments, "network" may be understood as an apparatus included in the network (e.g., an access network device, a core network device, etc.).

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present disclosure can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. may be replaced by a side channel, and an uplink, a downlink, etc. may be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

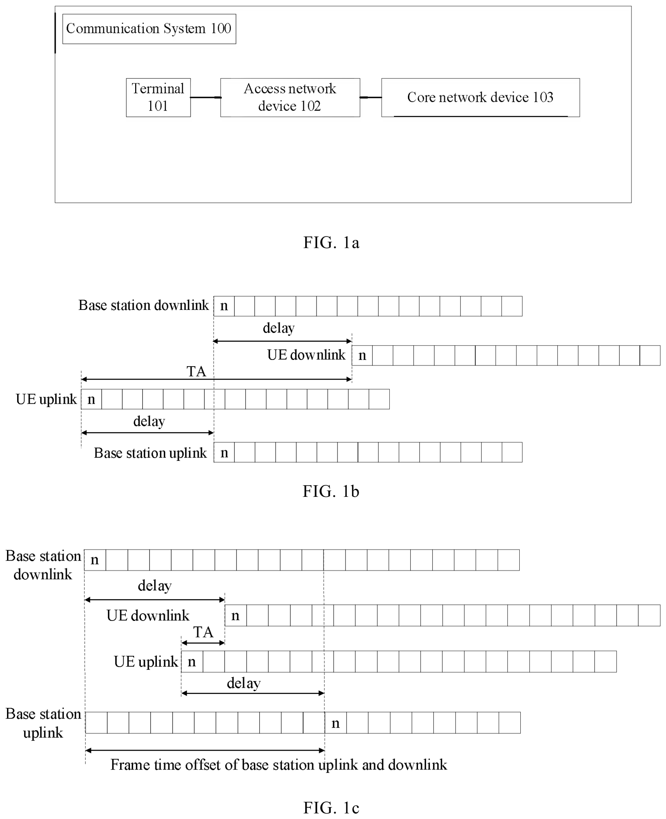

FIG. 1a is a schematic diagram illustrating an architecture of a communication system according to an embodiment of the present disclosure.

As illustrated in FIG. 1a, the communication system 100 may include a terminal 101 and an access network device 102.

In some embodiments, the terminal 101 may, for example, include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, which is not limited herein.

In some embodiments, the access network device 102 may be, for example, a node or device that accesses the terminal 101 to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, which is not limited herein.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, which is not limited herein.

In some embodiments, in some embodiments, the core network device may be one device including one or more network elements, or may be a plurality of devices or a device group, each including all or part of the one or more network elements. The network element may be virtual or physical. The core network may include, for example, at least one of an evolved packet core (EPC), a 5G core network (5GCN), and a next generation core (NGC).

It may be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

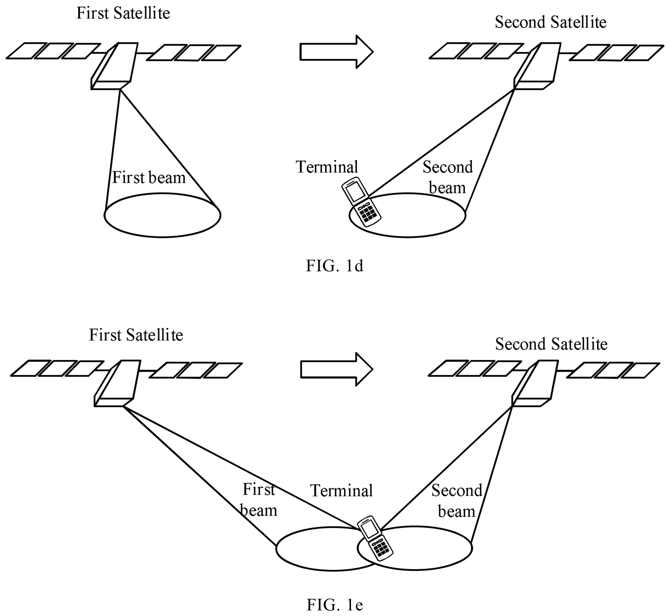

The following embodiments of the present disclosure may be applied to the communication system 100 or part of the subjects shown in FIG. 1a, but are not limited thereto. The subjects shown in FIG. 1a are examples, and the communication system may include all or part of the subjects in FIG. 1a, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In the research of wireless communication technology, satellite communication is considered to be an important aspect of the future development of the wireless communication technology. The satellite communication refers to communication performed by radio communication equipment on the ground using a satellite as a relay. The satellite communication system consists of a satellite part and a ground part. The satellite communication has characteristics of: a large communication range; performing communication between any two points as long as they are within a range covered by radio waves emitted by the satellite; and being less susceptible to land disasters (high reliability). As a supplement to the current cellular communication system on the ground, the satellite communication may have the following benefits.

Extended coverage: for areas that cannot be covered by current cellular communication systems or are costly to cover, such as oceans, deserts, remote mountainous areas, etc., the satellite communication may be used to solve communication problems.

Emergency communications: in a condition that infrastructures of the cellular communications are unavailable resulted by extreme situations such as earthquakes and other disasters, the satellite communication may be used to quickly establish communications connections.

Provision of industry applications: for example, for delay-sensitive services in long-distance transmission, the satellite communication may be used to reduce a delay of service transmission.

It may be foreseen that the satellite communication system and a terrestrial cellular communication system may gradually achieve deep integration and truly realize intelligent connections of all things.

In a satellite communication scenario, as shown in FIG. 1b and FIG. 1c, due to a long signal transmission distance between a transmitter and a receiver, there is a large deviation in timing of uplink transmission and downlink transmission. For presence of uplink transmission and downlink transmission, a time domain offset parameter may be introduced to compensate for a transmission delay.

The time domain offset parameter may be applied in various operations, such as, physical uplink shared channel (PUSCH) transmission scheduled by downlink control information (DCI); transmission of hybrid automatic repeat request (HARQ) feedback information and transmission of medium-access-control control element (MAC CE), etc.

In a non-terrestrial network (NTN) network, due to high-speed mobility of satellites, serving satellites of terminals in a target area may need to change constantly, that is, the terminals may need to frequently perform cell handover operations. This may bring a lot of signaling overhead, traffic interruption and unnecessary terminal power consumption.

The terminal may support satellite hard handover or soft handover scenarios in a case where a physical cell identifier (PCI) does not change. As shown in a satellite hard handover scenario of FIG. 1d and a satellite soft handover scenario of FIG. 1e, in the satellite hard handover scenario, after a serving satellite stops serving, the terminal needs to wait for a period of time before receiving service from a new satellite, and in the satellite soft handover scenario, coverages of a current serving satellite and a new serving satellite overlap.

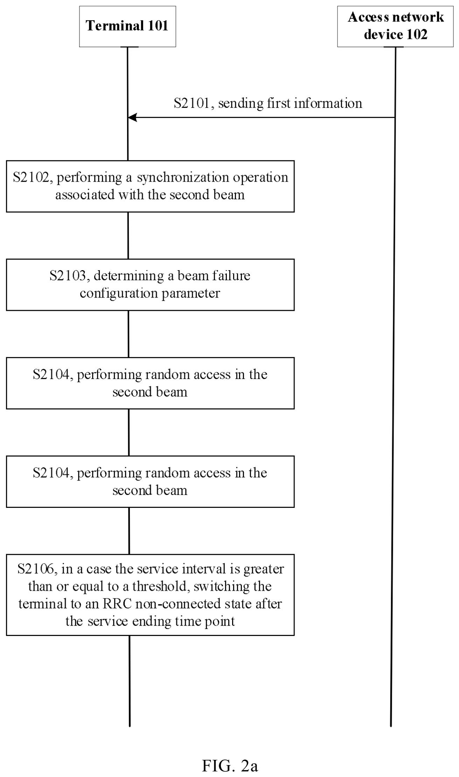

FIG. 2a is a schematic diagram illustrating interaction of an information transmission method according to an embodiment of the present disclosure. As shown in FIG. 2a, embodiments of the present disclosure relate to an information transmission method, which is configured in a communication system 100, and the method includes the following steps.

At step S2101, an access network device sends first information.

In some embodiments, the access network device may include: a base station.

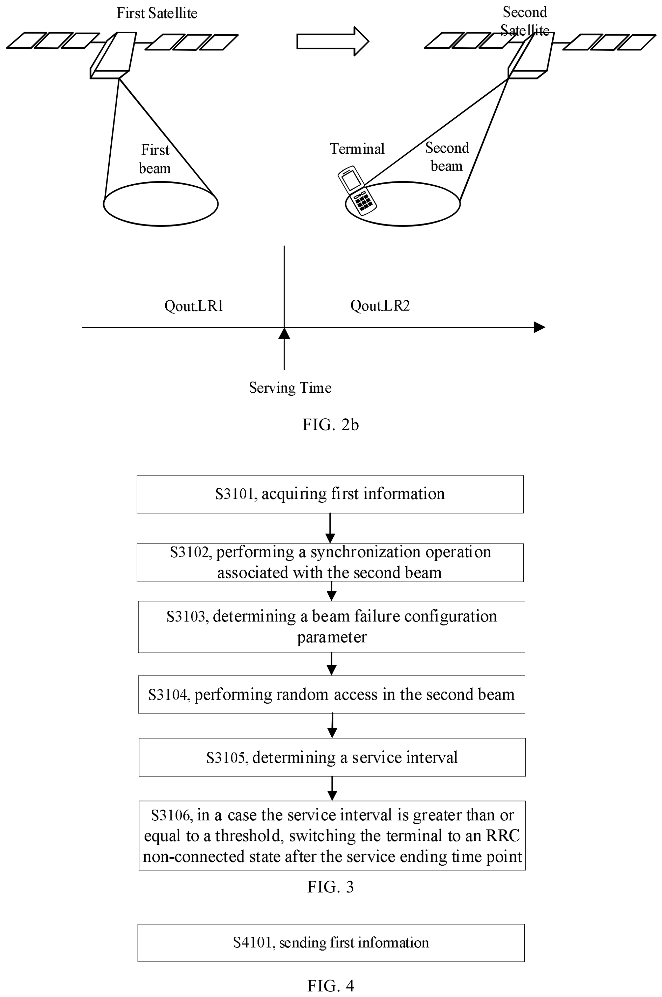

In some embodiments, the first information is used to determine a serving time of a first beam and/or a serving time of a second beam, as shown in FIG. 2b.

In some embodiments, the first beam and the second beam may include signal coverage beams of satellites in an NTN network.

In some embodiments, the first beam may be generated by a first satellite and the second beam may be generated by a second satellite, and the first satellite is different from the second satellite.

In some embodiments, a serving beam for a terminal is switched from a first beam to a second beam.

In some embodiments, the serving beam may be a beam that provides a signal coverage of a serving cell for the terminal.

In some embodiments, the first beam carries a wireless signal of a current serving cell of the terminal, and the second beam carries a wireless signal of a target serving cell to which the terminal performs handover.

In some embodiments, the first beam is a serving beam for the terminal before beam switching, and the second beam is a beam to be switched to for the terminal.

In some embodiments, the terminal may switch from the first beam to the second beam.

In some embodiments, switching, by the terminal, from the first beam to the second beam includes at least one of:
hard switching, by the terminal, from the first beam to the second beam; or soft switching, by the terminal, from the first beam to the second beam.

In some embodiments, the first information is used to indicate the serving time of the first beam and/or the serving time of the second beam.

In some embodiments, the first information is associated with the serving time of the first beam and/or the serving time of the second beam, to enable the terminal to determine the serving time of the first beam and/or the serving time of the second beam.

Illustratively, the first information may include: coverage range information of the first beam and mobility information of the satellite, and the terminal may determine the serving time of the first beam in combination with its own location.

In some embodiments, the access network device may send the first information to the terminal in a case where the terminal is within a signal coverage range of the first beam.

In some embodiments, the serving time of the first beam may include but is not limited to: a service starting time point of the first beam or a service ending time point of the first beam. The serving time of the second beam may include but is not limited to: a service starting time point of the second beam or a service ending time point of the second beam.

In some embodiments, the first information may be used for the terminal to determine an operation associated with switching from the first beam to the second beam.

Illustratively, the terminal may determine, based on the service starting time point of the second beam, a time point at which random access is performed on the second beam.

In some embodiments, the serving time of the first beam includes:
the service ending time point of the first beam;
the serving time of the second beam includes at least one of:
   the service starting time point of the second beam; or
   a time window in which the terminal performs beam measurement on the second beam.

In some embodiments, the time window in which the terminal performs the beam measurement on the second beam may be determined based on the service starting time point of the second beam.

In some embodiments, the beam measurement includes signal measurement for a wireless signal sent by the access network device (e.g., the second satellite) within the second beam.

In some embodiments, the beam measurement may be used for at least one of:
uplink synchronization;
downlink synchronization; or
terminal positioning.

Illustratively, the time window in which the terminal performs the beam measurement on the second beam may be located after the service starting time point of the second beam.

In some embodiments, the first beam and the second beam are associated with the same serving cell of the terminal.

In some embodiments, the first beam and the second beam being associated with the same serving cell of the terminal includes that a physical cell identifier (PCI) associated with the first beam is the same as a PCI associated with the second beam.

In some embodiments, the first beam and the second beam are associated with different serving cells of the terminal.

At step S2102, the terminal performs a synchronization operation associated with the second beam.

In some embodiments, the synchronization operation associated with the second beam includes but is not limited to at least one of:
an uplink synchronous operation;
a downlink synchronous operation;
determining a time domain offset parameter associated with uplink synchronization; or
determining a time domain offset parameter associated with downlink synchronization.

In some embodiments, the terminal performs a synchronization operation associated with the second beam based on the first information.

In some embodiments, performing the synchronization operation associated with the second beam based on the first information includes, but is not limited to, performing the synchronization operation associated with the second beam based on the serving time of the first beam and/or the serving time of the second beam.

Illustratively, the synchronization operation associated with the second beam may be performed after the service ending time point of the first beam.

Illustratively, the synchronization operation associated with the second beam may be performed in the time window for beam measurement on the second beam.

In some embodiments, the terminal acquires ephemeris information corresponding to the second beam based on the first information.

Illustratively, the terminal may acquire the ephemeris information corresponding to the second beam before the service starting time point of the second beam.

In some embodiments, performing the synchronization operation associated with the second beam includes at least one of:

performing beam measurement associated with downlink synchronization on the second beam; or
performing beam measurement on the second beam to determine a timing adjustment parameter associated with the second beam.

In some embodiments, the beam measurement associated with downlink synchronization may include: measuring a synchronization signal and physical broadcast channel block (SSB) or a CSI-RS. The downlink synchronization is achieved by measuring the SSB or the CSI-RS.

The synchronization operation associated with the second beam may only be performed in a case where the terminal is in signal coverage of the second beam. Therefore, performing the synchronization operation by the terminal needs to be based on the first information.

Illustratively, the beam measurement associated with downlink synchronization may be performed on the second beam within the time window for the beam measurement on the second beam.

In some embodiments, performing the beam measurement on the second beam includes, but is not limited to, performing beam measurement associated with terminal positioning on the second beam, and then determining a timing adjustment parameter associated with the second beam.

As shown in FIG. 1b and FIG. 1c, due to a long signal transmission distance between a transmitter and a receiver, there is a large offset in timing of uplink transmission and downlink transmission. For the uplink transmission and the downlink transmission, a transmission delay may be compensated by the time domain offset parameter.

For example, the beam measurement is used to determine a relative position between the terminal and the second satellite, and then the timing adjustment parameter may be determined.

The timing adjustment parameter may be used to compensate for an offset of the uplink transmission of the terminal.

In some embodiments, the timing adjustment parameter includes at least one of:
a common timing advance (common TA);
K_offset, in which K_offset is used to compensate for a delay of round-trip transmission from the terminal to an uplink synchronization point; or
K_mac, in which K_mac is used for a scheduling offset for MAC CE timing relationship enhancement or to compensate for a delay of round-trip transmission from the uplink synchronization point to the base station.

In some embodiments, the terminal may receive the ephemeris information of the satellite based on the first information.

In some embodiments, the ephemeris information is at least configured to determine at least one of: a location of the satellite, a motion trajectory of the satellite, and a velocity of the satellite. Further, a coverage time (such as the starting time point and/or the ending time point) of the satellite beam (such as the second beam) and the timing adjustment parameter may be determined.

In some embodiments, the synchronization operation associated with the second beam includes: adjusting uplink timing and/or downlink timing for the second beam according to the synchronization transmission configuration parameter indicated by the access network device.

In some embodiments, performing, based on the first information, the synchronization operation associated with the second beam includes, but is not limited to, adjusting, based on the serving time of the first beam and/or the serving time of the second beam, the uplink timing and/or the downlink timing for the second beam according to the synchronization transmission configuration parameter indicated by the access network device.

Illustratively, after the service starting time point of the second beam, the uplink timing and/or the downlink timing for the second beam may be adjusted according to the synchronization transmission configuration parameter indicated by the access network device.

In some embodiments, the access network device indicates the synchronization transmission configuration parameter to the terminal.

In some embodiments, the first information is also used to indicate the synchronization transmission configuration parameter.

In some embodiments, the access network device sends second information to the terminal, in which the second information is used to indicate the synchronization transmission configuration parameter, and the first information is different from the second information.

In some embodiments, the synchronization transmission configuration parameter may include at least one of: a compensation parameter for compensating the uplink transmission, or a compensation parameter for compensating the downlink transmission.

In some embodiments, the synchronization transmission configuration parameter includes at least one of:
an indication for adjusting the downlink timing;
the ephemeris information corresponding to the second beam;
a timing adjustment parameter associated with the uplink timing; or
information of an effective time of the synchronization transmission configuration parameter

In some embodiments, the synchronization transmission configuration parameters may be used to compensate for the offset of the uplink transmission and/or the offset of the downlink transmission of the terminal.

In some embodiments, the indication for adjusting the downlink timing may be used to instruct the terminal to perform downlink synchronization in the second beam.

In some embodiments, the indication for adjusting the downlink timing may be used to instruct the terminal to perform downlink synchronization based on a reference signal in the second beam.

In some embodiments, the reference signal includes at least one of: the SSB, the CSI-RS, or a tracking reference signal (TRS).

In some embodiments, the ephemeris information includes ephemeris information of the second satellite associated with the second beam.

In some embodiments, the ephemeris information is at least configured to determine at least one of: a location of the satellite, a motion trajectory of the satellite, and a velocity of the satellite. Further, a coverage time (such as the starting time point and/or the ending time point) of the satellite beam (such as the second beam) and the timing adjustment parameter may be determined.

In some embodiments, the timing adjustment parameter includes at least one of:
a common TA;
K_offset, in which K_offset is used to compensate for a delay of round-trip transmission from the terminal to an uplink synchronization point; or
K_mac, in which K_mac is used for a scheduling offset for MAC CE timing relationship enhancement or to compensate for a delay of round-trip transmission from the uplink synchronization point to the base station.

A starting point of time (Epoch time) is the information of the effective time of the synchronization transmission configuration parameter.

In some embodiments, the terminal adjusts, based on the serving time of the first beam and/or the serving time of the second beam determined by the first information, the uplink timing and/or the downlink timing for the second beam according to the synchronization transmission configuration parameter indicated by the access network device.

In some embodiments, the time indicated by the information of the effective time of the synchronization transmission configuration parameter is used to adjust the uplink timing and/or the downlink timing for the second beam according to the synchronization transmission configuration parameter indicated by the access network device.

At step S2103, the terminal determines a beam failure configuration parameter.

In some embodiments, the terminal determines the beam failure configuration parameter based on the first information.

In some embodiments, the beam failure configuration parameter is used for determining whether the first beam or the second beam is available.

In some embodiments, a beam failure configuration parameter of the first beam is different from a beam failure configuration parameter of the second beam.

In some embodiments, the terminal determines the beam failure configuration parameter corresponding to the first beam based on the serving time of the first beam determined by the first information.

For example, the terminal determines to adopt the beam failure configuration parameter corresponding to the first beam before the service ending time point of the first beam.

In some embodiments, the terminal determines the beam failure configuration parameter corresponding to the second beam based on the serving time of the second beam determined by the first information.

For example, the terminal determines to adopt the beam failure configuration parameter corresponding to the second beam after the serving time of the second beam.

In some embodiments, the beam failure configuration parameters of the first beam are different at different times.

In some embodiments, the terminal determines beam failure configuration parameters corresponding to the first beam at different times based on the serving time of the first beam determined by the first information.

For example, in a first predetermined time period before the service ending time point of the first beam, the terminal determines to adopt a first beam failure configuration parameter corresponding to the first beam.

For example, in a second predetermined time period before the service ending time point of the first beam, the terminal determines to adopt a second beam failure configuration parameter corresponding to the first beam.

In some embodiments, the terminal determines beam failure configuration parameters corresponding to the second beam at different times based on the serving time of the second beam determined by the first information.

For example, in a third predetermined time period after the service ending time point of the first beam, the terminal determines to adopt a third beam failure configuration parameter corresponding to the first beam.

For example, in a fourth predetermined time period after the service ending time of the first beam, the terminal determines to adopt a fourth beam failure configuration parameter corresponding to the first beam.

In some embodiments, the beam failure configuration parameter is preconfigured.

In some embodiments, the beam failure configuration parameter is sent by the access network device to the terminal.

In some embodiments, the terminal determines a failure of the first beam based on the beam failure configuration parameter and performs a beam failure recovery procedure.

At step S2104, the terminal performs random access in the second beam.

In some embodiments, the terminal performs the random access based on the serving time of the second beam.

In some embodiments, the random access may include at least one of: contention access; or non-contention access.

In some embodiments, a random access configuration of the random access is indicated by the access network device.

In some embodiments, the first information is used to indicate the random access configuration.

In some embodiments, the access network device sends second information to the terminal, and the second information is used to indicate the random access configuration, and the first information is different from the second information.

In some embodiments, the random access configuration includes at least one of: a transmission resource for a physical random access channel (PRACH), or a PRACH sequence.

At step S2105, the terminal determines a service interval.

In some embodiments, the terminal determines the service interval between the service ending time point and the service starting time point.

In some embodiments, the service interval is a duration of the service interval between a time point at which the first beam stops providing service for the terminal and a time point at which the second beam provides service for the terminal.

At step S2106, in a case the service interval is greater than or equal to a threshold, the terminal is switched to an RRC non-connected state after the service ending time point.

In some embodiments, the RRC non-connected state includes at least one of: an RRC inactive state or an RRC idle state.

In some embodiments, the terminal is switched to the RRC non-connected state after the service ending time point of the first beam, and is switched to an RRC connected state after the service starting time point of the second beam.

In some embodiments, a name of information, etc. is not limited to names mentioned in the embodiments, and terms such as "information", "message", "signal", "signaling", "report", "configuration", "indication", "instruction", "command", "channel", "parameter", "field", "data" and the like may be used interchangeably.

In some embodiments, the terms such as "send", "transmit", "report", "transmission" and the like may be used interchangeably.

The information transmission method in the embodiments of the present disclosure may include at least one of step S2101 to step S2106. For example, step S2101 may be implemented as an independent embodiment, step S2103 may be implemented as an independent embodiment, step S2104 may be implemented as an independent embodiment, step S2105 may be implemented as an independent embodiment, or step S2106 may be implemented as an independent embodiment.

For example, a combination of step S2101 and step S2102 may be implemented as an independent embodiment, a combination of step S2101 to step S2103 may be implemented as an independent embodiment, a combination of step S2101 and step S2102, and step S2103 may be implemented as an independent embodiment, a combination of step S2101 and step S2102, and step S2104 may be implemented as an independent embodiment, a combination of step S2101 and step S2102, step S2105 and step S2106 may be implemented as an independent embodiment, but is not limited thereto.

In some embodiments, step S2103, step S2104, step S2105 and step S2106 are optional steps, and one or more of these steps may be omitted or replaced in different embodiments.

FIG. 3 is a flowchart illustrating an information transmission method according to an embodiment of the present disclosure. As illustrated in FIG. 3, an embodiment of the present disclosure relates to the information transmission method and is performed by a terminal 101. The method may include the following steps.

At step 3101, first information is acquired.

For the optional implementation of step S3101, reference may be made to the optional implementation of step S2101 in FIG. 2a and other related parts in the embodiment involved in FIG. 2a, and details may not be repeated here.

In some embodiments, the terminal receives the first information from an access network device, but is not limited thereto. The terminal may also receive the first information from other entities.

In some embodiments, the terminal acquires the first information specified by a protocol.

In some embodiments, the terminal acquires the first information from an upper layer(s).

In some embodiments, the terminal performs processing to acquire the first information.

In some embodiments, step S3101 may be omitted, and the terminal may autonomously implement the function indicated by the first information, or the above function may be null or default.

At step S3102, a synchronization operation associated with a second beam is performed.

For the optional implementation of step S3102, reference may be made to the optional implementation of step S2102 in FIG. 2a and other related parts in the embodiment involved in FIG. 2a, and details may not be repeated here.

At step S3103, a beam failure configuration parameter is determined.

For the optional implementation of step S3103, reference may be made to the optional implementation of step S2103 in FIG. 2a and other related parts in the embodiment involved in FIG. 2a, and details may not be repeated here.

At step S3104, random access is performed in a second beam.

For the optional implementation of step S3104, reference may be made to the optional implementation of step S2104 in FIG. 2a and other related parts in the embodiment involved in FIG. 2a, and details may not be repeated here.

At step S3105, a service interval is determined.

For the optional implementation of step S3105, reference may be made to the optional implementation of step S2105 in FIG. 2a and other related parts in the embodiment involved in FIG. 2a, and details may not be repeated here.

At step S3106, in a case the service interval is greater than or equal to a threshold, the terminal is switched to an RRC non-connected state after a service ending time point.

For the optional implementation of step S3106, reference may be made to the optional implementation of step S2106 in FIG. 2a and other related parts in the embodiment involved in FIG. 2a, and details may not be repeated here.

The information transmission method in the embodiments of the present disclosure may include at least one of step S3101 to step S3106. For example, step S3101 may be implemented as an independent embodiment, step S3103 may be implemented as an independent embodiment, step S3104 may be implemented as an independent embodiment, step S3105 may be implemented as an independent embodiment, or step S3106 may be implemented as an independent embodiment.

For example, a combination of step S3101 and step S3102 may be implemented as an independent embodiment, a combination of step S3101 to step S3103 may be implemented as an independent embodiment, a combination of step S3101 and step S3102, and step S3103 may be implemented as an independent embodiment, a combination of step S3101 and step S3102, and step S3104 may be implemented as an independent embodiment, a combination of step S3101 and step S3102, step S3105 and step S3106 may be implemented as an independent embodiment, but is not limited thereto.

In some embodiments, step S3103, step S3104, step S3105 and step S3106 are optional steps, and one or more of these steps may be omitted or replaced in different embodiments.

FIG. 4 is a flowchart illustrating an information transmission method according to an embodiment of the present disclosure. As illustrated in FIG. 4, an embodiment of the present disclosure relates to the information transmission method and is performed by an access network device 102. The method may include the following step.

At step 4101, first information is sent.

For the optional implementation of step S4101, reference may be made to the optional implementation of step S2101 in FIG. 2a and other related parts in the embodiment involved in FIG. 2a, and details may not be repeated here.

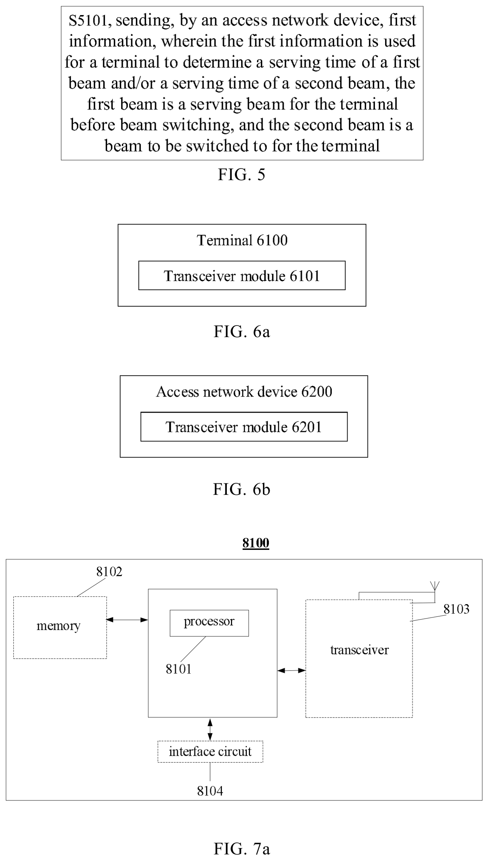

FIG. 5 is a flowchart illustrating interaction of an information transmission method according to an embodiment of the present disclosure. As illustrated in FIG. 5, an embodiment of the present disclosure relates to the information transmission method and is configured in a communication system 100. The method may include the following step.

At step S5101, an access network device sends first information. The first information is used for a terminal to determine a serving time of a first beam and/or a serving time of a second beam, the first beam is a serving beam for the terminal before beam switching, and the second beam is a beam to be switched to for the terminal.

For the optional implementation of step S5101, reference may be made to the optional implementations of step S2101 in FIG. 2a, step S3101in FIG. 3, step S4101 in FIG. 4, and other related parts in the embodiment involved in FIG. 2a, FIG. 3 and FIG. 4, and details may not be repeated here.

In some embodiments, the above methods may include the methods of the communication system side, the terminal side, the access network device side, and other embodiments mentioned above, and details may not be repeated here.

The following provides a specific example in combination with any of the above embodiments.

A terminal receives a configuration (first information) of a base station to determine adjustment of a serving beam, and the terminal adjusts uplink and downlink synchronization for a new serving cell (a cell corresponding to a second beam) or a new serving beam (a second beam).

The terminal receives the configuration of the base station to determine time information (serving time), and the time information is used as time information for the terminal executing an operation for the new serving cell or the new service beam.

In an implementation, the time information indicates serving time information of a current serving cell or a current serving beam, for example, the serving time information is a service ending time point of the current serving cell (the cell corresponding to the first beam) or the current serving beam (the first beam). The terminal may determine an operation for the new serving cell or the new serving beam based on information.

In another implementation, the time information indicates the serving time information of the new serving cell or the new serving beam, for example, the serving time information is a service starting time point of the new serving cell or the new serving beam. The terminal may determine the operation for the new serving cell or the new serving beam based on the information.

Further, the terminal may determine an interval between the service ending time point of the current serving cell or the current serving beam and the serving time information of the new serving cell or the new serving beam. If the interval is greater than or equal to a predefined or preconfigured time length, the terminal enters an IDLE state after the service ending time point of the current serving cell or the current serving beam.

In another implementation, the time information indicates time information when the terminal performs measurements on the new serving cell or the new serving beam, for example, the serving time information is used to determine a time window when the terminal performs the operation for the new serving cell or the new serving beam. The terminal may determine the operation for the new serving cell or the new serving beam based on the information.

Mode 1: The terminal determines to perform measurement (beam measurement) for the new serving cell or the new serving beam based on configuration information of the base station, which further includes the following implementations.

In an implementation, the terminal starts measurement operations for the new serving cell or the new serving beam at indicated time information:
- SSB measurement, used to acquire downlink synchronization;
- acquiring ephemeris information, used to acquire the ephemeris information of a serving satellite of the new serving cell or the new serving beam;
- acquiring timing adjustment related parameters, such as common TA, K_offset, K_mac and other parameters, which are used to adjust an offset of uplink transmission (timing adjustment parameter) for the new serving cell or the new serving beam.

The terminal initiates a random access procedure on the new serving cell or the new serving beam, and the random access procedure may be based on contention access or non-contention access. In a case of the non-contention access, the terminal may also receive configuration information (first information) from an original serving base station to acquire resources occupied by PRACH transmission, a PRACH sequence and other random access-related configuration information.

In another implementation method, the terminal starts adjusting its uplink and downlink timing at the indicated time information, and applies a new configuration, etc., including that the terminal receives the configuration information of the base station to acquire an adjustment for a configuration (synchronous transmission configuration parameter) for the new serving cell or the new serving beam. The adjustment includes:
- downlink timing adjustment command, used to determine downlink synchronization in the new serving cell or the new serving beam;
- acquiring the ephemeris information, used to acquire the ephemeris information of a serving satellite of the new serving cell or the new serving beam;
- acquiring the timing adjustment parameters such as common TA, K_offset, K_mac and other parameters, which are used to adjust an offset of uplink transmission (timing adjustment parameter) for the new serving cell or the new serving beam;
- Epoch time (optional), used to indicate an application time of the configuration information.

The terminal starts updating the configuration information (synchronous transmission configuration parameter) at the indicated time information (or a time indicated by the epoch time).

The terminal initiates the random access procedure on the new serving cell or the new serving beam, and the random access procedure may be based on the contention access or the non-contention access. In a case of the non-contention access, the terminal may also receive the configuration information from the original serving base station to acquire the resources occupied by the PRACH transmission, the PRACH sequence and other random access-related configuration information.

Mode 2: The terminal uses a new beam failure configuration based on the indicated time information.

The terminal determines the beam failure configuration parameter based on a predefined manner or the configuration information sent by the base station, and determines a beam available status using a new configuration parameter within the indicated time information. The beam configuration parameter at least includes an indication parameter for beam failure. A beam failure recovery procedure is performed with determining the failure of the original serving beam.

The embodiments of the present disclosure also propose an apparatus for implementing any of the above methods. For example, an apparatus is proposed, the above apparatus includes units for implementing various steps performed by the terminal in any of the above methods. For another example, an apparatus is proposed, including units for implementing various steps performed by a network device (such as an access network device, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of processor calling software, or in the form of a hardware circuit, or in part by processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6a is a schematic diagram illustrating an architecture of a terminal according to an embodiment of the present disclosure. As shown in FIG. 6a, the terminal 6100 includes a transceiver module 6101, configured to receive first information, in which the first information is used to determine a serving time of a first beam and/or a serving time of a second beam, the first beam is a serving beam for a terminal before beam switching, and the second beam is a beam to be switched to for the terminal. In an example, the transceiver module 6101 is configured to execute the steps related to information transmission and reception executed by the terminal in any of the above information transmission methods. The terminal 6100 further includes a processing module. The processing module is configured to execute the steps related to determining, processing executed by the terminal in any of the above methods. Details are not repeated here.

FIG. 6b is a schematic diagram illustrating an architecture of an access network device according to an embodiment of the present disclosure. As shown in FIG. 6b, the access network device 6200 includes a transceiver module 6201, configured to send first information, in which the first information is used to determine a serving time of a first beam and/or a serving time of a second beam, the first beam is a serving beam for a terminal before beam switching, and the second beam is a beam to be switched to for the terminal. In an example, the transceiver module 6201 is configured to execute the steps related to information transmission and reception executed by the access network device in any of the above information transmission methods. Details are not repeated here.

FIG. 7a is a schematic diagram of a communication device 8100 proposed in an embodiment of the present disclosure. The communication device 8100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above information transmission methods. The communication device 8100 may be used to implement the information transmission method described in the above method embodiments, and for details, reference may be made to the description in the above method embodiments.

As shown in FIG. 7a, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 8101 is used to call instructions so that the communication device 8100 executes any of the above information transmission methods.

In some embodiments, the communication device 8100 further includes one or more memories 8102 for storing instructions. In an example, all or part of the memory 8102 may be outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and the other steps are performed by the processor 8101.

In some embodiments, the transceiver may include a receiver and a transmitter, and the receiver and the transmitter may be separate or integrated. In an example, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In an example, the communication device 8100 further includes one or more interface circuits 8104, which are connected to the memory 8102. The interface circuit 8104 may be used to receive signals from the memory 8102 or other apparatuses, and may be used to send signals to the memory 8102 or other apparatuses. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 8a. The communication device may be an independent device or may be part of a larger device. For example, the communication device may be: 1) an independent integrated circuit (IC), or a chip, or a chip system or subsystem; (2) a collection of one or more ICs, In an example, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

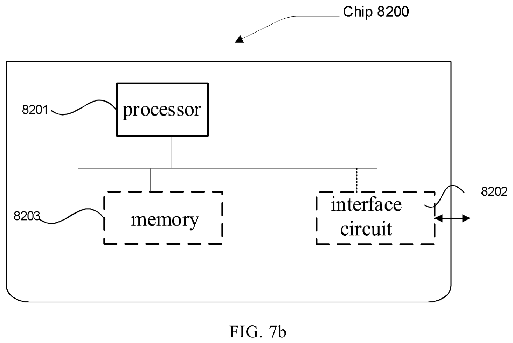

FIG. 7b is a schematic diagram of a chip 8200 proposed in an embodiment of the present disclosure. In case where the communication device 8100 may be a chip or a chip system, reference may be made to the schematic diagram of the chip 8200 shown in FIG. 7b, but the present disclosure is not limited thereto.

The chip 8200 includes one or more processors 8201, and the processor 8201 is used to call instructions so that the chip 8200 executes any of the above methods.

In some embodiments, the chip 8200 further includes one or more interface circuits 8202, which are connected to the memory 8203. The interface circuit 8202 may be used to receive signals from the memory 8203 or other apparatuses, and the interface circuit 8202 may be used to send signals to the memory 8203 or other apparatuses. For example, the interface circuit 8202 may read instructions stored in the memory 8203 and send the instructions to the processor 8201. In an example, the terms such as "interface circuit", "interface", "transceiver pin", and "transceiver" may be exchangeable with each other.

In some embodiments, the chip 8200 further includes one or more memories 8203 for storing instructions. In an example, all or part of the memory 8203 may be outside the chip 8200.

The present disclosure also proposes a storage medium, on which instructions are stored, and when the instructions are executed on the communication device 8100, the communication device 8100 executes any of the above methods. In an example, the storage medium is an electronic storage medium. In an example, the storage medium is a computer-readable storage medium, but is not limited to thereto, and it may also be a storage medium readable by other apparatuses. In an example, the storage medium may be a non-transitory storage medium, but is not limited to thereto, and it can also be a temporary storage medium.

The present disclosure also proposes a program product that, when executed by the communication device 8100, causes the communication device 8100 to execute any of the above methods. In an example, the program product is a computer program product.

The present disclosure also proposes a computer program, which, when executed on a computer, causes the computer to execute any one of the above information transmission methods.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The specification and embodiments are only considered as an example, and the true scope and spirit of the disclosure are indicated by the appended claims.

It should be understood that the present disclosure is not limited to the precise structure described above and shown in the drawings, and various modifications and changes may be made without departing from its scope. The scope of the present application is only limited by the appended claims.

## Claims

1. An information transmission method, performed by a terminal, comprising:
receiving first information, wherein the first information is used to determine a serving time of a first beam and/or a serving time of a second beam, the first beam is a serving beam for the terminal before beam switching, and the second beam is a beam to be switched to for the terminal.

2. The method according to claim 1, wherein the serving time of the first beam comprises:
a service ending time point of the first beam;
the serving time of the second beam comprises at least one of:
a service starting time point of the second beam; or
a time window in which the terminal performs beam measurement on the second beam.

3. The method according to claim 2, further comprising:
determining a service interval between the service ending time point and the service starting time point.

4. The method according to claim 3, further comprising:
in a case the service interval is greater than or equal to a threshold, switching the terminal to a radio resource control (RRC) non-connected state after the service ending time point, wherein the RRC non-connected state comprises at least one of: an RRC inactive state or an RRC idle state.

5. The method according to any one of claims 1 to 4, further comprising at least one of:
performing a synchronization operation associated with the second beam based on the first information; or
acquiring ephemeris information corresponding to the second beam based on the first information.

6. The method according to claim 5, wherein performing the synchronization operation associated with the second beam comprises at least one of:
performing beam measurement associated with downlink synchronization on the second beam; or
performing beam measurement on the second beam to determine a timing adjustment parameter associated with the second beam.

7. The method according to claim 5, wherein performing the synchronization operation associated with the second beam comprises:
adjusting uplink timing and/or downlink timing for the second beam according to a synchronization transmission configuration parameter indicated by an access network device.

8. The method according to claim 7, wherein the synchronization transmission configuration parameter comprises at least one of:
an indication for adjusting the downlink timing;
the ephemeris information corresponding to the second beam;
a timing adjustment parameter associated with the uplink timing; or
information of an effective time of the synchronization transmission configuration parameter.

9. The method according to any one of claims 1 to 8, further comprising:
determining a beam failure configuration parameter based on the first information, wherein the beam failure configuration parameter is used for determining whether the first beam or the second beam is available.

10. The method according to any one of claims 1 to 9, further comprising:
performing, by the terminal, random access within a signal coverage range of the second beam, wherein a random access configuration of the random access is indicated by an access network device.

11. The method according to any one of claims 1 to 10, wherein the first beam and the second beam are associated with the same serving cell of the terminal.

12. An information transmission method, performed by an access network device, comprising:
sending first information, wherein the first information is used to determine a serving time of a first beam and/or a serving time of a second beam, the first beam is a serving beam for a terminal before beam switching, and the second beam is a beam to be switched to for the terminal.

13. The method according to claim 12, wherein the serving time of the first beam comprises:
a service ending time point of the first beam;
the serving time of the second beam comprises at least one of:
a service starting time point of the second beam; or
a time window in which the terminal performs beam measurement on the second beam.

14. The method according to claim 13, wherein
the service ending time point of the first beam and the service starting time point of the second beam are used for the terminal to determine a service interval from the first beam ending service to the second beam starting service.

15. The method according to claim 14, wherein
the service interval is used for the terminal to determine whether to switch to a radio resource control (RRC) non-connected state after the service ending time point, wherein the RRC non-connected state comprises at least one of: an RRC inactive state, or an RRC idle state.

16. The method according to any one of claims 12 to 15, wherein
the first information is used for the terminal to perform a synchronization operation associated with the second beam; or
the first information is used for determining ephemeris information corresponding to the second beam.

17. The method of claim 16, wherein the synchronization operation associated with the second beam comprises at least one of:
performing beam measurement associated with downlink synchronization on the second beam; or
performing beam measurement on the second beam to determine a timing adjustment parameter associated with the second beam.

18. The method of claim 16, wherein the synchronization operation associated with the second beam comprises:
adjusting uplink timing and/or downlink timing for the second beam according to a synchronization transmission configuration parameter indicated by the access network device.

19. The method of claim 18, wherein the synchronization transmission configuration parameter comprises at least one of:
an indication for adjusting the downlink timing;
the ephemeris information corresponding to the second beam;
a timing adjustment parameter associated with the second beam; or
information of an effective time of the synchronization transmission configuration parameter.

20. The method according to any one of claims 12 to 19, wherein
the first information is used for the terminal to determine a beam failure configuration parameter, wherein the beam failure configuration parameter is used for determining whether the first beam or the second beam is available.

21. The method according to any one of claims 12 to 20, wherein:
the first information indication is used to indicate a random access configuration of random access performed by the terminal within a signal coverage range of the second beam.

22. The method according to any one of claims 12 to 21, wherein the first beam and the second beam are associated with the same serving cell of the terminal.

23. An information transmission method, performed by a communication system, comprising:
sending, by an access network device, first information, wherein the first information is used for a terminal to determine a serving time of a first beam and/or a serving time of a second beam, the first beam is a serving beam for the terminal before beam switching, and the second beam is a beam to be switched to for the terminal.

24. A terminal, comprising:
a transceiver module, configured to receive first information, wherein the first information is used to determine a serving time of a first beam and/or a serving time of a second beam, the first beam is a serving beam for a terminal before beam switching, and the second beam is a beam to be switched to for the terminal.

25. An access network device, comprising:
a transceiver module, configured to send first information, wherein the first information is used to determine a serving time of a first beam and/or a serving time of a second beam, the first beam is a serving beam for a terminal before beam switching, and the second beam is a beam to be switched to for the terminal.

26. A communication system, wherein the information transmission system comprises a terminal and an access network device,
the terminal is configured to implement the information transmission method according to any one of claims 1 to 11;
the access network device is configured to implement the information transmission method according to any one of claims 12 to 22.

27. A communication device, comprising:
one or more processors;
wherein the one or more processors are configured to call instructions to cause the communication device to perform the information transmission method according to any one of claims 1 to 11 or claims 12 to 22.

28. A storage medium storing instructions that, when running on a communication device, cause the communication device to perform the information transmission method according to any one of claims 1 to 11 or any one of claims 12 to 22.
